(19) Europäisches Patentamt
European Patent Office
Office européen des brevets

(11) **EP 1 998 159 B1**

(12) **EUROPÄISCHE PATENTSCHRIFT**

(45) Veröffentlichungstag und Bekanntmachung des Hinweises auf die Patenterteilung:
**02.05.2012 Patentblatt 2012/18**

(51) Int Cl.:
***G01M 1/32*** *(2006.01)*

(21) Anmeldenummer: 08005740.9

(22) Anmeldetag: **27.03.2008**

(54) **Verfahren zum automatisierten Anbringen von Wuchtgewichten an Fahrzeugrädern**

Method for automatically attaching balancing weights to automobile wheels

Procédé d'application automatique de poids d'équilibrage sur des roues de véhicules

(84) Benannte Vertragsstaaten:
**DE FR GB IT**

(30) Priorität: **26.05.2007 DE 102007024748**

(43) Veröffentlichungstag der Anmeldung:
**03.12.2008 Patentblatt 2008/49**

(73) Patentinhaber: **Bayerische Motoren Werke
80809 München (DE)**

(72) Erfinder:
• **Mau, Arthur
94439 Rossbach (DE)**
• **Baier, Martin
94505 Bernried (DE)**

(56) Entgegenhaltungen:
**EP-A2- 0 684 464 US-A- 5 355 729**

**Beschreibung**

Die Erfindung bezieht sich auf ein Verfahren nach dem Oberbegriff des ersten Anspruchs.

In der Großserienfertigung von Fahrzeugen ist es allgemein bekannt, auch die für die Fahrzeuge benötigten Räder automatisiert mit Reifen zu bestücken und dann anschließend in automatisch arbeitenden Wuchtanlagen auszuwuchten.

In der Regel werden heute Leichtmetallräder auch in der Erstausrüstung von Neufahrzeugen verwendet. Diese Leichtmetallräder werden nicht mehr - wie bei Stahlfelgen üblich - dadurch ausgewuchtet, dass am äußeren Felgenrand Gewichte eingeclipst werden, sondern dadurch, dass an zwei definierten Umfangsflächen des Rades Wuchtgewichte angeklebt werden.

Bei Unwuchten von unter 60 g wird in der Regel ein Wuchtgewicht verwendet.

Bei Unwuchten von über 60 g werden zwei Wuchtgewichte verwendet, die bei vollautomatisch arbeitenden Wuchtanlagen von einem Roboter an den vorbezeichneten Stellen angeklebt werden.

Damit sichergestellt ist, dass bei den größtmöglichen Wuchtgewichten (2 x 60 g) diese nicht übereinander geklebt werden, wird ein vorher definierter Abstand der Wuchtgewichte voneinander festgelegt. Die beiden äußeren Ränder der Wuchtgewichte bilden mit dem Radmittelpunkt den sog. Spreizwinkel. Dieser Spreizwinkel ist fest eingestellt mit dem Nachteil, dass beim Ankleben zweier kleinerer Wuchtgewichte diese zu weit voneinander entfernt sind, so dass größere Wuchtgewichte verlangt werden, als rechnerisch zum Auswuchten der Unwucht notwendig wäre. Damit entsteht ein relativ hoher unnötiger Verbrauch von Wuchtgewichten.

Aufgabe der Erfindung ist es, hier Abhilfe zu schaffen.

Diese Aufgabe wird erfindungsgemäß durch die Merkmale des ersten Anspruchs gelöst.

Im Gegensatz zum bisherigen Vorgehen wird erfindungsgemäß nunmehr die tatsächliche Länge der Wuchtgewichte berücksichtigt, so dass sie immer mit minimalem Abstand zueinander an der vordefinierten Stelle angebracht werden können.

Dies lässt sich erfindungsgemäß besonders leicht dann durchführen, wenn - wie Anspruch 2 vorschlägt - der Spreizwinkel variabel gewählt wird. Er wird dann gemäß der angegebenen Formel ermittelt und aus ihm dann die Höhe des tatsächlich zu verwendenden Wuchtgewichtes berechnet.

Eine Vielzahl von Versuchen haben ergeben, dass gerade bei geringeren Wuchtgewichten, nämlich zwischen 60 und 90 g, 5 % des Wuchtgewichtes eingespart werden können.

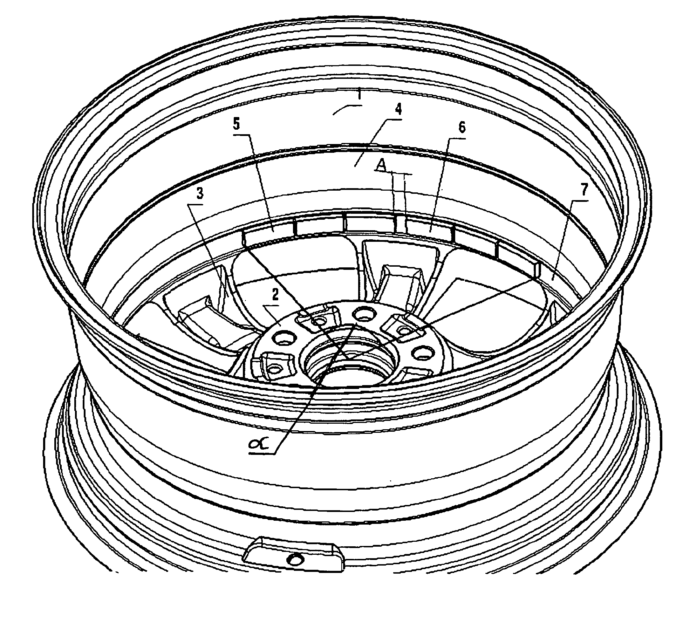

Im Folgenden wird die Erfindung anhand eines Ausführungsbeispiels näher erläutert. In der einzigen Figur ist ein Leichtmetallrad 1 dargestellt und zwar von seiner Innenseite her. Es besteht wie allgemein üblich aus der Radscheibe 2, den Speichen 3 und dem Felgenkranz 4.

Im vorliegenden Fall ist das Rad bereits ausgewuchtet. Hier sind zwei Wuchtgewichte 5 und 6 an der Anklebfläche 7 angeklebt.

Die Masse der anzuklebenden Wuchtgewichte errechnet sich aus der gemessenen Unwucht, der Länge L jedes Wuchtgewichtes und des zwischen den Wuchtgewichten notwendigen Abstandes A sowie des hierfür erforderlichen Spreizwinkels $\alpha$.

Das sei an folgendem Beispiel erläutert. Der Radius, auf dem die Anbringfläche 7 liegt, betrage im folgenden Beispiel 192 mm. Bei einem vorgegebenen festen Spreizwinkel $\alpha$, wie bisher üblich, beträgt bei einer gemessen Unwucht von 78,6 g das notwendige Ausgleichgewicht 82,96 g. Es werden also zwei Ausgleichsgewichte verwendet, von denen das eine 40 g wiegt und das andere 45 g.

Die Masse des benötigten Gewichtes errechnet sich nach der Formel TG = U/cos $\alpha$/2, wobei U im vorliegenden Beispiel 78,6 g ist und $\alpha$ 37,3° beträgt. Bei einem derartigen Spreizwinkel können zwei Gewichte à 60 g angeklebt werden, zwischen denen noch ein Abstand A = 4 mm verbleibt.

Gemäß der Erfindung wird jedoch kein fester Spreizwinkel $\alpha$ verwendet, sondern ein variabler Spreizwinkel. Zunächst wird die Bogenlänge der Anbringfläche bei einem Zentriwinkel von 1° Grad berechnet. Diese Bogenlänge beträgt im vorliegenden Beispiel bei einem Radius von 192 mm 3,3 mm pro

Bei einer gemessenen Unwucht von 78,6 g sollten zwei Wuchtgewichte im Bereich von 40 g verwendet werden. Bei einem minimalen Abstand von 4 mm und einer Länge der 40 g Wuchtgewichte von 80 mm ergibt dies einen Spreizwinkel von 25,1°.

Somit errechnet sich das tatsächliche Wuchtgewicht nach obiger Formel zu tatsächlich 80,45 g. Mit zwei Wuchtgewichten à 40 g kommt man damit der errechneten und der gemessenen Unwucht sehr nahe.

Gegenüber dem Ausgangsbeispiel nach dem Stand der Technik spart man sich 5 g.

Die Erfindung hat neben dem Vorteil des geringeren Gewichteverbrauches auch den Vorteil, dass die benötigten Gewichte massenmäßig näher an der gemessen Unwucht liegen, als dies nach dem Stand der Technik mit festem Spreizwinkel der Fall wäre.

**Patentansprüche**

**1.** Verfahren zum automatisierten Anbringen von Wuchtgewichten an Fahrzeugrädern, insbesondere an Leichtmetallräder für Personenkraftfahrzeuge, mit Hilfe von Robotern in einer automatisiert arbeitenden Wuchtanlage, in der die Unwucht ermittelt und die Masse des Wuchtgewichtes unter Berücksichtigung der Radgeometrie und der Anzahl und Länge der Wuchtgewichte ausgewählt wird, um vom Roboter an die ermittelte Stelle am Fahrzeugrad angebracht zu werden, **dadurch gekennzeichnet, dass** bei der Auswahl der Wuchtgewichte deren Lange bereück sichtigt wird, der Spreizwinkel variabel gewählt wird und die Wuchtgewichte mit einem minimalem Abstand zu einander angebracht werden.

2. Verfahren nach Anspruch 1,
**dadurch gekennzeichnet, dass** sich die Masse der benötigten Wuchtgewichte nach folgender Formel berechnet:

$$TG = U \: / \cos \alpha/2,$$

mit
TG: Masse des benötigten Wuchtgewichtes,
U: gemessene Unwucht vor Ausgleich,
$\alpha$: Spreizwinkel,
wobei $\alpha$ sich nach folgender Formel berechnet:

$$\alpha = (L + A)/ \: b$$

mit
L: Länge der benötigten Wuchtgewichte,
A: minimaler Abstand der Gewichte voneinander,
b: Bogenlänge an der Anbringfläche des Wuchtgewichtes am Rad für den Zentriwinkel 1°.

**Claims**

1. A method of automatically attaching balancing weights to motor vehicle wheels, especially to light-metal wheels for passenger cars, using robots in an automated balancing installation in which the unbalance is determined and the mass of the balancing weights is chosen so as to allow for the wheel shape and the number and length of the balancing weights in order to be attached by a robot to the vehicle wheel at the selected place, **characterised in that** the balancing weights are chosen to allow for their length, the angle of twist is made variable and the balancing weights are disposed at a minimum distance from one another.

2. A method according to claim 1,
**characterised in that** the mass of the required balancing weights is calculated using the following formula

$$TG = U/\cos \: \alpha/2,$$

where
TG = mass of the required balancing weight
U = measured unbalance before balancing and
$\alpha$ = angle of twist,
wherein $\alpha$ is calculated from the following formula

$$\alpha = (L+A)/b$$

where
L = length of the required balancing weights,
A = minimum distance of weights from one another, and
b = arc length at the place where the balancing weight is attached to the wheel at a sector angle of 1°.

**Revendications**

1. Procédé d'installation automatique de masselottes d'équilibrage sur des roues de véhicules, notamment des roues en métal léger de véhicule de tourisme à l'aide de robots dans une installation d'équilibrage automatisée, dans laquelle on détermine le balourd et on sélectionne le poids de la masselotte d'équilibrage en tenant compte de la géométrie de la roue et du nombre et de la longueur des masselottes d'équilibrage pour les installer avec le robot à l'endroit déterminé de la roue du véhicule,
procédé **caractérisé en ce que**
pour le choix des masselottes d'équilibrage, on tient compte de leur longueur, on sélectionne de manière variable l'angle d'écartement et on installe les masselottes d'équilibrage avec un intervalle minimum entre eux.

2. Procédé selon la revendication 1,
**caractérisé en ce qu'**
on calcule le poids des masselottes d'équilibrage nécessaires en appliquant la formule suivante :

$$TG = U \: / \cos \alpha/2,$$

formule dans laquelle
TG : poids de la masselotte d'équilibrage nécessaire,
U : balourd mesuré avant l'équilibrage,
$\alpha$ : angle d'écartement,
l'angle a se calcule selon la formule suivante :

$$\alpha = (L + A)/ \: b$$

dans laquelle

L : longueur des masselottes d'équilibrage nécessaires,

A : distance minimale entre les masselottes,

b : longueur de l'arc de la surface d'installation de la masselotte d'équilibrage sur la roue pour un angle de centrage de 1°.